# EUROPÄISCHE PATENTSCHRIFT

(11) **EP 1 838 563 B1**
(45) Veröffentlichungstag und Bekanntmachung des Hinweises auf die Patenterteilung: **18.08.2010**
(21) Anmeldenummer: 06700996.9
(22) Anmeldetag: 11.01.2006
(51) Int. Cl.: B60T 13/567

(54) **UNTERDRUCKBREMSKRAFTVERSTÄRKER MIT EINEM VERBESSERTEN ANSCHLUSSELEMENT ZUR VERBINDUNG MIT EINER UNTERDRUCKQUELLE**
VACUUM BRAKE BOOSTER COMPRISING AN IMPROVED CONNECTION ELEMENT FOR CONNECTING TO A LOW-PRESSURE SOURCE
SERVOFREIN A DEPRESSION COMPORTANT UN ELEMENT DE RACCORDEMENT AMELIORE SERVANT A RELIER LE SERVOFREIN A DEPRESSION AVEC UNE SOURCE DE DEPRESSION

(30) Priorität: 19.01.2005 DE 102005002552
(43) Veröffentlichungstag der Anmeldung: 03.10.2007
(73) Patentinhaber: Lucas Automotive GmbH, 56070 Koblenz (DE)
(72) Erfinder: IBARRA ROMERO, Peio, E-31008 Pamplona (ES); CIA VICUNA, Inaki, E-31012 Pamplona (ES); BRAVO VILLAMAYOR, Ernesto, E-31012 Pamplona (ES)
(74) Vertreter: Beyer, Andreas
(86) Internationale Anmeldenummer: PCT/EP2006/000189
(87) Internationale Veröffentlichungsnummer: WO 2006/077042

(56) Entgegenhaltungen:
- DE-A1- 4 003 957
- DE-A1- 10 351 314
- US-A1- 2004 083 884

## Beschreibung

Die vorliegende Erfindung betrifft einen Unterdruckbremskraftverstärker gemäß dem Oberbegriff des Patentanspruchs 1. Ein solcher Unterdruckbremskraftverstärker ist aus der DE-A-40 03 957 bekannt.

Unterdruckbremskraftverstärker sind seit langem bekannt und finden sich heute in praktisch jedem Kraftfahrzeug, das mit einer hydraulischen Bremsanlage ausgerüstet ist. Sie dienen dazu, eine vom Fahrer eines Fahrzeugs zur Betätigung der Bremsanlage aufzubringende Kraft auf einem komfortablen, relativ niedrigen Niveau zu haltern. Um dies zu erreichen, fügt der Bremskraftverstärker der von einem Fahrer aufgebrachten Betätigungskraft eine vom Bremskraftverstärker erzeugte, auch als Servokraft bezeichnete Hilfskraft hinzu, so dass die an den Radbremsen zur Verfügung stehende Bremsbetätigungskraft im Vergleich zu der von dem Fahrer aufgebrachten Kraft deutlich verstärkt ist.

Die erwähnte Hilfskraft wird durch einen Druckunterschied im Gehäuse des Bremskraftverstärkers erzeugt, der auf eine bewegliche Wand wirkt, die zwischen einer Arbeitskammer und einer Unterdruckkammer des Bremskraftverstärkers angeordnet ist. Zur Steuerung der Höhe des Druckunterschieds und damit der Größe der vom Bremskraftverstärker erzeugten Hilfskraft dient ein Steuerventil, welches einerseits die Arbeitskammer des Bremskraftverstärkers mit Atmosphärendruck (oder auch mit Überdruck) und andererseits die Unterdruckkammer des Bremskraftverstärkers mit der Arbeitskammer verbinden kann.

Damit ein Unterdruckbremskraftverstärker funktionieren kann, muss seine Unterdruckkammer im Betrieb mit einer Unterdruckquelle verbunden sein, die in der Unterdruckkammer ständig einen gewissen Unterdruck bezüglich des Atmosphärendrucks aufrechterhält. Als Unterdruckquelle findet häufig der im Ansaugtrakt eines Kraftfahrzeugverbrennungsmotors herrschende Unterdruck Verwendung, bei neueren Fahrzeugen mit ihren verhältnismäßig wenig gedrosselten Motoren wird allerdings immer öfter eine separate Unterdruckpumpe als Unterdruckquelle eingesetzt.

In jedem Fall muss die Unterdruckkammer mit der Unterdruckquelle fluidleitend verbunden sein. In der Regel wird dazu ein Schlauch verwendet, der von dem am Bremskraftverstärker zur Anbindung des Schlauchs vorhandenen Anschlusselement bis zur Unterdruckquelle führt. Aus Platzgründen ist das Anschlusselement häufig abgewinkelt ausgeführt.

Während früher zumeist elastische Schlauchleitungen verwendet wurden, die sich von dem Anschlusselement zur Unterdruckquelle erstreckten, werden heutzutage immer öfter nichtelastische, vorgeformte Schlauchleitungen eingesetzt, deren eines Ende auf den zweiten Anschlussstutzen des Anschlusselements aufgeschrumpft wird. Wenn solche nichtelastischen, vorgeformten Verbindungsschlauchleitungen automatisch an einen Unterdruckbremskraftverstärker montiert werden sollen ist es wichtig, dass bei jedem Unterdruckbremskraftverstärker einer Serie das Anschlusselement immer die gleiche Position bezüglich des entsprechenden Endes der Verbindungsschlauchleitung hat. Dies ist bei herkömmlichen Unterdruckbremskraftverstärkern mit einem abgewinkelten Anschlusselement zur Verbindung des Bremskraftverstärkers mit einer Unterdruckquelle nicht der Fall. Vielmehr muss bei aus dem Stand der Technik bekannten derartigen Unterdruckbremskraftverstärkern das Anschlusselement vor seiner Verbindung mit der Verbindungsschlauchleitung in eine passende Position gedreht werden.

Aus der DE-A-103 51 314 ist ein Unterdruckbremskraftverstärker mit einem abgewinkelten Anschlusselement bekannt, dessen Gehäuse formschlüssig in ein Sicherungselement eingreift, welches einen Vorsprung aufweist, der zur Verdrehsicherung des Anschlusselements in eine Ausnehmung des Bremskraftverstärkergehäuses eingreift.

Aus der DE-B-33 13 319, die den Oberbegriff des Anspruchs 1 bildet, ist in weiterer Unterdruckbremskraftverstärker mit einem abgewinkelten Anschlusselement bekannt. Das Anschlusselement hat einen ersten Anschlussstutzen, der durch eine ovale Öffnung in der Gehäusewandung des Bremskraftverstärkers ragt und mittels eines Dichtgummis, der eine der Öffnungsform angepasste ovale Außenkontur besitzt, in diese Öffnung eingeknöpft ist. Der erste Anschlussstutzen weist eine Stirnverzahnung auf, die in eine entsprechende, am Dichtgummi ausgebildete Gegenverzahnung eingreift, um den Dichtgummi und den ersten Anschlussstutzen formschlüssig verdrehsicher miteinander zu verbinden.

Der Erfindung liegt die Aufgabe zugrunde, einen Unterdruckbremskraftverstärker mit einem abgewinkelten, zur Verbindung mit einer Unterdruckquelle dienenden Anschlusselement bereitzustellen, welches möglichst wenig Teile aufweist, um kostengünstig herstellbar zu sein, und welches dennoch ohne Änderung seiner Konstruktion in eine kundenspezifisch vorgegebene Position gebracht werden kann und diese Position dann zuverlässig beibehält.

Diese Aufgabe wird durch eine Vorrichtung mit den Merkmalen des Anspruchs 1 gelöst.

Ausgehend von dem eingangs genannten Unterdruckbremskraftverstärker ist diese Aufgabe dadurch gelöst, dass bei dem Gehäuse des Anschlusselements die Stellung des zweiten Gehäuseteils zum ersten Gehäuseteil bezüglich eines zweiten Winkels starr fixiert ist und dass die Form der Öffnung im Bremskraftverstärkergehäuse und die Querschnittsform des ersten Anschlussstutzens so aufeinander abgestimmt sind, dass ein Verdrehen des ersten Anschlussstutzens in der Öffnung des Bremskraftverstärkergehäuses zumindest im Wesentlichen verhindert ist. Durch die starre Fixierung des ersten und des zweiten Gehäuseteils zueinander in Bezug auf einen zweiten Winkel wird verhindert, dass sich eine einmal eingestellte Winkelstellung zwischen den beiden Gehäuseteilen ungewollt verändert. Die aufeinander abgestimmten Formen der Öffnung für das Anschlusselement im Bremskraftverstärkergehäuse und des Querschnitts des ersten Anschlussstutzens resultieren in einem Formwiderstand, der das gesamte Anschlusselement in einer vorgegebenen Position festhält.

Bei dem erfindungsgemäßen Unterdruckbremskraftverstärker hat das Gehäuse des Anschlusselements nur die beiden bereits genannten Gehäuseteile, und eine Verbindungsebene, in der die beiden Gehäuseteile aneinander stoßen, ist kreisförmig. Auf diese Weise können die beiden separaten Gehäuseteile zusammengefügt und in Bezug aufeinander in die gewünschte Stellung gedreht und sodann starr fixiert werden.

Die zwei Gehäuseteile sind zur gegenseitigen starren Fixierung in einer vorbestimmten Stellung, die dem zweiten Winkel entspricht, miteinander verschweißt, verklebt oder verquetscht. Diese Fixierungsmöglichkeiten sind insbesondere dann von Vorteil, wenn das Gehäuse des Anschlusselements aus Kunststoff hergestellt ist.

Um gemäß der Erfindung zu verhindern, dass das Anschlusselement sich in Bezug auf das Bremskraftverstärkergehäuse verdreht, sind grundsätzlich alle aufeinander abgestimmten Formen der Öffnung im Bremskraftverstärkergehäuse und des Querschnitts des ersten Anschlussstutzens geeignet, die zu einem Formschluss der Verbindung zwischen erstem Anschlussstutzen und der Öffnung im Bremskraftverstärkergehäuse führen, in die der erste Anschlussstutzen des Anschlusselements eingeführt ist. Bei bevorzugten Ausführungsbeispielen des erfindungsgemäßen Unterdruckbremskraftverstärkers ist die Form der genannten Öffnung und des Querschnitts des ersten Anschlussstutzens nicht kreisförmig, sondern vorzugsweise oval. Eine solche ovale Querschnittsform lässt sich ebenso problemlos wie eine Kreisform herstellen und führt dennoch zu dem gewünschten Formwiderstand der Verbindung zwischen Anschlusselement und Bremskraftverstärkergehäuse, der ein Verdrehen des Anschlusselements verhindert.

Zur zuverlässigen Abdichtung des ersten Anschlussstutzens in der zugehörigen Öffnung des Bremskraftverstärkergehäuses ist bei bevorzugten Ausführungsbeispielen eine Dichtmanschette aus Elastomermaterial auf dem ersten Anschlussstutzen angeordnet, die den Rand der Öffnung des Bremskraftverstärkergehäuses umgreift. Aus Gründen einer guten Passform hat eine solche Dichtmanschette vorzugsweise eine der Querschnittsform des ersten Anschlussstutzens angepasste Querschnittsform.

Gemäß einer bevorzugten Ausführungsform des erfindungsgemäßen Unterdruckbremskraftverstärkers, bei dem das Gehäuse des Anschlusselements nur zwei Gehäuseteile umfasst, weist dieses Gehäuse benachbart zur Verbindungsebene seiner beiden Gehäuseteile einen vergrößerten Hohlraum auf. Dieser Hohlraum kann vollständig in dem einen oder anderen Gehäuseteil angeordnet sein, er kann sich aber auch teils in dem einen Gehäuseteil und teils in dem anderen Gehäuseteil befinden. Bei einer solchen Ausführungsform dient der beschriebene Hohlraum vorzugsweise zur Aufnahme eines Rückschlagventils, welches ein Einströmen von Atmosphärendruck in die Unterdruckkammer unterbindet. Das Rückschlagventil wird beim Zusammenbau des Anschlusselements zunächst in den Hohlraum oder einen Teil davon eingesetzt, dann werden die beiden Gehäuseteile zusammengefügt und schließlich in der dem gewünschten zweiten Winkel entsprechenden Stellung starr aneinander fixiert.

Ein Ausführungsbeispiel eines erfindungsgemäßen Unterdruckbremskraftverstärkers wird im Folgenden anhand der beigefügte, schematischen Zeichnungen näher erläutert. Es zeigt:
- Figur 1: den Bereich eines erfindungsgemäßen Unterdruckbremskraftverstärkers, in dem ein abgewinkeltes Anschlusselement zur Verbindung des Unter- druckbremskraftverstärkers mit einer Unterdruckquelle im Bremskraftver- stärkergehäuse befestigt ist, in aufgebrochener und teilweiser geschnittener Darstellung,
- Figur 2: das Anschlusselement aus Figur 1 in räumlicher und auseinandergezoge- ner Ansicht, und
- Figur 3: die Ansicht III-III aus Figur 2.

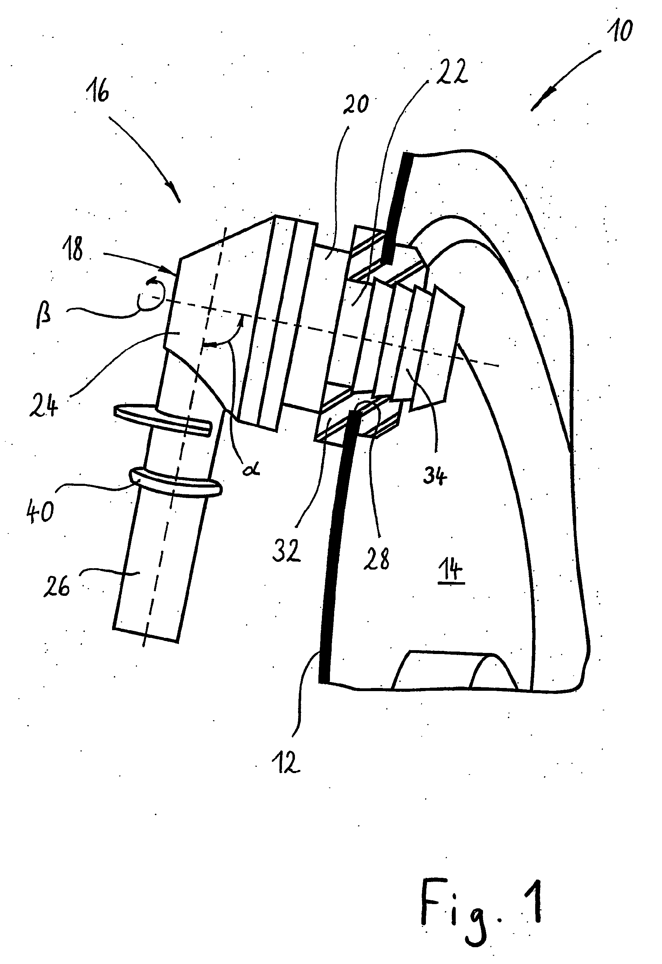

In Figur 1 ist in aufgebrochener Darstellung der hier interessierende Bereich eines Unterdruckbremskraftverstärkers 10 für eine hydraulische Kraftfahrzeugbremsanlage gezeigt. Der Bremskraftverstärker 10 hat ein schalenförmiges Gehäuse 12, dessen Innenraum durch eine in Figur 1 nicht gezeigte bewegliche Wand in eine Unterdruckkammer 14 und eine Arbeitskammer (in Figur 1 nicht zu sehen) unterteilt ist.

Während des Betriebs eines Fahrzeuges, in das der Bremskraftverstärker 10 eingebaut ist, steht die Unterdruckkammer 14 über ein Anschlusselement 16 ständig in Verbindung mit einer Unterdruckquelle, beispielsweise mit dem Ansaugtrakt eines das Fahrzeug antreibenden Verbrennungsmotors oder auch mit einer separaten Vakuumpumpe, so dass in der Unterdruckkammer 14 ständig ein bestimmter Unterdruck herrscht.

Will der Fahrer des Kraftfahrzeuges bremsen, so wird dieser Wunsch dem Bremskraftverstärker 10 über ein Eingangsglied (nicht dargestellt) mitgeteilt, welches ein Steuerventil (ebenfalls nicht dargestellt) des Bremskraftverstärkers so betätigt, dass in die Arbeitskammer, in der vor einer Betätigung des Bremskraftverstärkers annähernd derselbe Druck wie in der Unterdruckkammer 14 herrscht (d.h., die Arbeitskammer ist ebenfalls evakuiert), Atmosphärendruck einströmt. Infolgedessen baut sich an der beweglichen Wand eine Druckdifferenz auf, die multipliziert mit der Fläche der beweglichen Wand eine Servo- oder Hilfskraft ergibt, die vom Bremskraftverstärker an die Bremsanlage des Kraftfahrzeugs abgegeben wird (üblicherweise an einen dem Bremskraftverstärker 10 nachgeschalteten Hauptzylinder der Bremsanlage).

Zur Verbindung der Unterdruckkammer 14 mit einer Unterdruckquelle dient das bereits erwähnte innen hohle Anschlusselement 16. Aus Platzgründen, d.h. um in axialer Richtung des Bremskraftverstärkers 10 möglichst wenig Platz zu beanspruchen, hat ein Gehäuse 18 des Anschlusselements 16 eine abgewinkelte Form, wobei die Abwinklung im gezeigten Ausführungsbeispiel ungefähr 90 Grad beträgt.

Das Gehäuse 18 des Anschlusselements 16 besteht im dargestellten Ausführungsbeispiel aus einem ersten Gehäuseteil 20, welches einen ersten Anschlussstutzen 22 trägt, und einem zweiten Gehäuseteil 24, das einen zweiten Anschlussstutzen 26 trägt, der sich unter einem ersten Winkel α zum ersten Anschlussstutzen 22 erstreckt. Der Winkel α beträgt im dargestellten Ausführungsbeispiel etwa 90 Grad.

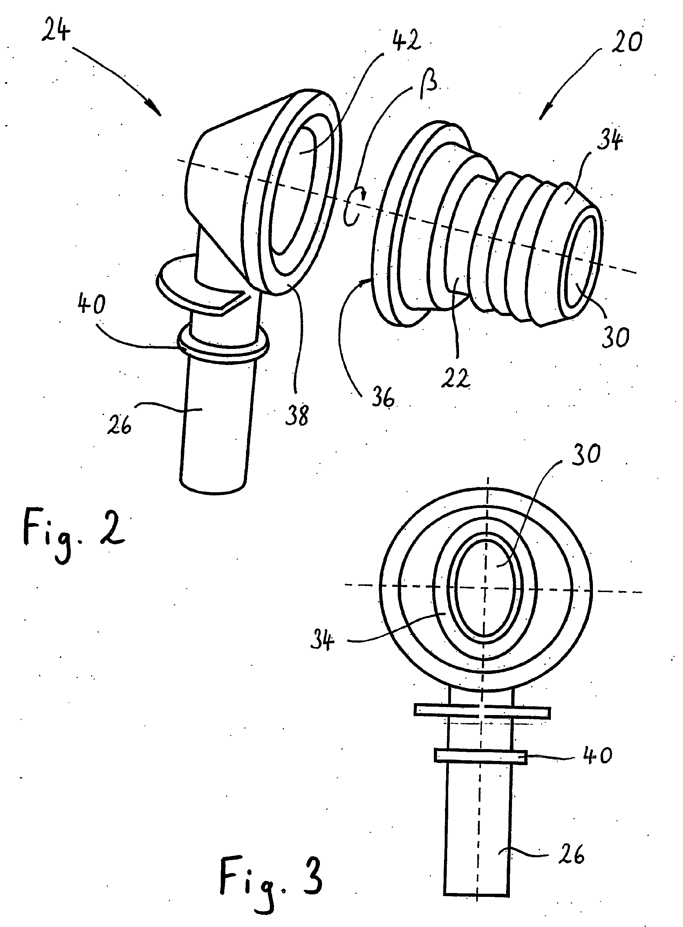

Der erste Anschlussstutzen 22 des Anschlusselements 16 erstreckt sich durch eine hier oval ausgebildete Öffnung 28 im Bremskraftverstärkergehäuse 12 von außen in die Unterdruckkammer 14 hinein. Wie insbesondere aus Figur 3 ersichtlich hat der erste Anschlussstutzen 22 eine ebenfalls ovale Querschnittsform, d.h. sowohl seine äußere Gestalt ist im Querschnitt oval wie auch ein in ihm ausgebildeter Kanal 30. Letzteres ist allerdings nicht zwingend, wichtig ist lediglich, dass die äußere Querschnittsform des ersten Anschlussstutzens 22 auf die Form der Öffnung 28 so abgestimmt ist, dass ein Verdrehen des ersten Anschlussstutzens 22 in der Öffnung 28 zumindest im Wesentlichen verhindert ist, d.h. der Kanal kann ohne weiteres auch eine runde Querschnittsform haben.

Im gezeigten Ausführungsbeispiel ist auf dem ersten Anschlussstutzen 22 eine Dichtmanschette 32 angeordnet, deren innerer und äußerer Querschnitt ebenfalls oval und damit der Form des ersten Anschlussstutzens 22 angepasst ist und die den Rand der Öffnung 28 wie in Figur 1 dargestellt beidseitig umgreift. Aufgrund dieser zwischen der Öffnung 28 und dem ersten Anschlussstutzen 22 angeordneten elastischen Dichtmanschette lässt sich der erste Anschlussstutzen 22 in der Öffnung 28 unter Kraftaufwand etwas verdrehen, jedoch bildet sich im elastischen Material der Dichtmanschette 32 dann eine Rückstellkraft aus, die nach einem Wegfall der zum Verdrehen aufgewandten Kraft den ersten Anschlussstutzen 22 wieder in seine ursprüngliche Stellung zurückführt. Ein Verdrehen des ersten Anschlussstutzens 22 in der Öffnung 28 ist damit im Wesentlichen verhindert.

Um einen besseren Halt der Dichtmanschette 32 auf dem ersten Anschlussstutzen 22 zu gewährleisten, ist letzterer mit einer kegelstumpfförmigen Verrippung 34 versehen. Bei geeigneter, d.h. ausreichend elastischer Ausbildung des Materials des ersten Anschlussstutzens 22 kann dieser auch ohne Zwischenschaltung einer Dichtmanschette in der Öffnung 28 des Bremskraftverstärkergehäuses 12 angeordnet sein.

Beide Gehäuseteile 20 und 24 sind bei dem in den Figuren gezeigten Ausführungsbeispiel aus Kunststoff hergestellt, vorzugsweise durch Spritzguss. Das erste Gehäuseteil 20 hat an seinem vom ersten Anschlussstutzen 22 abgewandten Ende eine kreisringförmige Stirnfläche 36, die zusammen mit einer gleich groß dimensionierten kreisringförmigen Stirnfläche 38 am zweiten Gehäuseteil 24 eine Verbindungsebene festlegt, in der die beiden Gehäuseteile 20 und 24 aneinander stoßen. In dieser Verbindungsebene lassen sich die beiden Gehäuseteile 20 und 24 relativ zueinander um einen zweiten Winkel β drehen, um einen gewünschten Winkel β einstellen zu können, den der zweite Anschlussstutzen 26 bezüglich des ersten Anschlussstutzens 22 haben soll. Hierzu wird bei der Fertigung des Anschlusselements 16 der gewünschte Drehwinkel β eingestellt, bei dem sich der zweite Anschlussstutzen 26 in der gewünschten Orientierung bezüglich des in der Öffnung 28 fixierten ersten Anschlussstutzens 22 erstreckt. Sodann werden die beiden Stirnflächen 36 und 38 mittels Ultraschall verschweißt, so dass die Stellung des zweiten Gehäuseteils 24 nunmehr zum ersten Gehäuseteil 20 unter Einhaltung des gewünschten Winkels β starr fixiert ist. Statt des Verschweißens mit Ultraschall kommt auch ein Verkleben der beiden Stirnflächen 36 und 38, ein Verquetschen der beiden Gehäuseteile 20 und 24 im Bereich der beiden Stirnflächen 36 und 38 oder auch ein die Einhaltung des eingestellten Winkels β garantierenden formschlüssiges Verrasten in Betracht.

Der am zweiten Gehäuseteil 24 einstückig angeformte zweite Anschlussstutzen 26 ist von üblicher hohlzylindrischer Form und hat außen einen als Ringbund 40 ausgeführten Anschlag, der ein Aufschieben eines hier nicht gezeigten Schlauches begrenzt, der für eine Verbindung mit der Unterdruckquelle sorgt.

Der Unterdruck-Bremskraftverstärker 10 weist somit ein Anschlusselement 16 auf, welches aufgrund der Fixierung der beiden Winkel α und β eine eindeutige und genau reproduzierbare Ausrichtung des zweiten Anschlussstutzens 26 erreicht, was für eine automatische Montage eines Bremskraftverstärkers im Kraftfahrzeug oder auch zur automatischen Montage des Schlauchs am zweiten Anschlussstutzen 26 vorteilhaft ist.

Im Bereich der zwischen den beiden Stirnflächen 36 und 38 angeordneten Verbindungsebene ist bei dem gezeigten Anschlusselement 16 ferner ein bezüglich des sich durch das Anschlusselement 16 erstreckenden Kanals 30 vergrößerter innerer Hohlraum 42 ausgebildet, von dem beim gezeigten Ausführungsbeispiel ein Teil diesseits der Verbindungsebene im ersten Gehäuseteil 20 und ein anderer Teil jenseits der Verbindungsebene im zweiten Gehäuseteil 24 angeordnet ist. Dieser innere Hohlraum 42 dient zur Aufnahme eines nicht gezeigten Rückschlagventils, welches ein Einströmen von Atmosphärendruck in die Unterdruckkammer 14 verhindert. Das Rückschlagventil wird in den Hohlraum 42 eingesetzt, bevor die beiden Gehäuseteile 20 und 24 miteinander fest verbunden werden.

## Patentansprüche

1. Unterdruckbremskraftverstärker (10) mit einem Gehäuse (12) und einem abgewinkelten Anschlusselement (16) zur Verbindung des Unterdruckbremskraftverstärkers mit einer Unterdruckquelle, wobei das Anschlusselement (16) einen ersten Anschlussstutzen (22), der durch eine Öffnung (28) im Gehäuse (12) in eine Unterdruckkammer (14) des Unterdruckbremskraftverstärkers reicht, und einen zweiten Anschlussstutzen (26) zur Verbindung des Anschlusselements (16) mit der Unterdruckquelle sowie ein mehrteiliges Gehäuse (18) mit einem ersten Gehäuseteil (20), das den ersten Anschlussstutzen (22) trägt, und einem zweiten Gehäuseteil (24) aufweist, das den unter einem ersten Winkel (α) zum ersten Anschlussstutzen (22) angeordneten zweiten Anschlussstutzen (26) trägt, wobei die Form der Öffnung (28) im Bremskraftverstärkergehäuse (12) und die Querschnittsform des ersten Anschlussstutzens (22) so aufeinander abgestimmt sind, dass ein Verdrehen des ersten Anschlussstutzens (22) in der Öffnung (28) des Bremskraftverstärkergehäuses (12) zumindest im Wesentlichen verhindert ist,
**dadurch gekennzeichnet, dass**
- das Gehäuse (18) nur die beiden Gehäuseteile (20, 24) aufweist und dass eine Verbindungsebene, in der die beiden Gehäuseteile (20, 24) aneinander stoßen, kreisringförmig ist,
- die beiden Gehäuseteile (20, 24) in einer vorbestimmten Stellung, die einem zweiten Winkel (β) entspricht, miteinander verschweißt, verklebt oder verquetscht sind, und dass
- die Öffnung (28) des Bremskraftverstärkergehäuses (12) und die Querschnittsform des ersten Anschlussstutzens (22) nicht kreisförmig sind.

2. Unterdruckbremskraftverstärker nach Anspruch 1,
**dadurch gekennzeichnet, dass** die Öffnung (28) des Bremskraftverstärkergehäuses (12) und die Querschnittsform des ersten Anschlussstutzens (22) oval sind.

3. Unterdruckbremskraftverstärker nach einem der vorhergehenden Ansprüche,
**dadurch gekennzeichnet, dass** auf dem ersten Anschlussstutzen (22) eine Dichtmanschette (32) aus Elastomermaterial angeordnet ist, die den Rand der Öffnung (28) des Bremskraftverstärkergehäuses (12) umgreift.

4. Unterdruckbremskraftverstärker nach Anspruch 3,
**dadurch gekennzeichnet, dass** die Querschnittsform der Dichtmanschette (32) der Querschnittsform des ersten Anschlussstutzens (22) angepasst ist.

5. Unterdruckbremskraftverstärker nach einem der vorhergehenden Ansprüche,
**dadurch gekennzeichnet, dass** das Gehäuse des Anschlusselements (16) -benachbart zur Verbindungsebene seiner beiden Gehäuseteile (20, 24) einen vergrößerten Hohlraum (42) aufweist.

6. Unterdruckbremskraftverstärker nach Anspruch 5,
**dadurch gekennzeichnet, dass** in dem Hohlraum (42) ein Rückschlagventil aufgenommen ist, das ein Einströmen von Atmosphärendruck in die Unterdruckkammer (14) verhindert.

## Claims

1. Vacuum brake booster (10) comprising a housing (12) and a bent connecting element (16) for connecting the vacuum brake booster to a vacuum source, wherein the connecting element (16) comprises a first connecting piece (22) which extends through an opening (28) in the housing (12) into a vacuum chamber (14) of the vacuum brake booster, and a second connecting piece (26) for connecting the connecting element (16) to the vacuum source, and a multi-part housing (18) with a first housing part (20) which carries the first connecting piece (22) and a second housing part (24) which carries the second connecting piece (26) arranged at a first angle (α) to the first connecting piece (22), wherein the shape of the opening (28) in the brake booster housing (12) and the cross-sectional shape of the first connecting piece (22) are matched to each other in such a way that a rotation of the first connecting piece (22) in the opening (28) of the brake booster housing (12) is at least substantially prevented,
**characterised in that**
- the housing (18) comprises only the two housing parts (20, 24) and **in that** a connecting plane in which the two housing parts (20, 24) abut each other is circular ring-shaped,
- the two housing parts (20, 24) are welded, glued or crimped together in a predetermined position, which corresponds to a second angle (β), and **in that**
- the opening (28) of the brake booster housing (12) and the cross-sectional shape of the first connecting piece (22) are not circular.

2. Vacuum brake booster according to claim 1,
**characterised in that** the opening (28) of the brake booster housing (12) and the cross-sectional shape of the first connecting piece (22) are oval.

3. Vacuum brake booster according to any one of the preceding claims,
**characterised in that** a sealing collar (32) made of elastomeric material is arranged on the first connecting piece (22) and surrounds the edge of the opening (28) of the brake booster housing (12).

4. Vacuum brake booster according to claim 3,
**characterised in that** the cross-sectional shape of the sealing collar (32) is adapted to the cross-sectional shape of the first connecting piece (22).

5. Vacuum brake booster according to any one of the preceding claims,
**characterised in that** adjacent to the connecting plane of its two housing parts (20, 24) the housing of the connecting element (16) has an enlarged cavity (42).

6. Vacuum brake booster according to claim 5,
**characterised in that** a non-return valve is received in the cavity (42) and prevents atmospheric pressure flowing into the vacuum chamber (14).

## Revendications

1. Servofrein à dépression (10) comportant un logement (12) et un élément de raccordement coudé (16) servant à relier le servofrein à dépression à une source de dépression, ledit élément de raccordement (16) présentant un premier manchon de raccordement (22) qui pénètre dans une chambre de dépression (14) par une ouverture (28) ménagée dans le logement (12) du servofrein à dépression, et un deuxième manchon de raccordement (26) servant à relier l'élément de raccordement (16) à la source de dépression, ainsi qu'un logement (18) à plusieurs parties qui comporte une première partie de logement (20) qui supporte le premier manchon de raccordement (22) et une deuxième partie de logement (24) qui supporte le deuxième manchon de raccordement (26) disposé selon un premier angle (α) par rapport au premier manchon de raccordement (22), la forme de l'ouverture (28) ménagée dans le logement (12) du servofrein à dépression et la forme de la section transversale du premier manchon de raccordement (22) étant déterminées l'une par rapport à l'autre de manière à empêcher, au moins sensiblement, la rotation du premier manchon de raccordement (22) dans l'ouverture (28) ménagée dans le logement (12) du servofrein à dépression,
**caractérisé en ce que**
- le logement (18) ne présente que les deux parties de logement (20, 24), et **en ce que** le plan de jonction des deux parties de logement (20, 24) est de forme annulaire,
- les deux parties de logement (20, 24) sont soudées, collées ou pressées l'une à l'autre dans une position prédéterminée qui correspond à un deuxième angle (β), et **en ce que**
- l'ouverture (28) ménagée dans le logement (12) du servofrein à dépression et la forme de la section transversale du premier manchon de raccordement (22) ne sont pas de forme circulaire.

2. Servofrein à dépression selon la revendication 1,
**caractérisé en ce que** l'ouverture (28) ménagée dans le logement (12) du servofrein à dépression et la forme de la section transversale du premier manchon de raccordement (22) sont de forme ovale.

3. Servofrein à dépression selon l'une des revendications précédentes,
**caractérisé en ce qu'**un manchon d'étanchéité (32) qui se compose d'une matière élastomère et entoure le bord de l'ouverture (28) du logement (12) du servofrein à dépression est disposé sur le premier manchon de raccordement (22).

4. Servofrein à dépression selon la revendication 3,
**caractérisé en ce que** la forme de la section transversale du manchon d'étanchéité (32) est adaptée à la forme de la section transversale du premier manchon de raccordement (22).

5. Servofrein à dépression selon l'une des revendications précédentes,
**caractérisé en ce que** le logement de l'élément de raccordement (16) voisin du plan de jonction de ses deux parties de logement (20, 24) présente une cavité agrandie (42).

6. Servofrein à dépression selon la revendication 5,
**caractérisé en ce qu'**une valve anti-retour qui empêche l'afflux de pression atmosphérique dans la chambre de dépression (14) est logée dans ladite cavité (42).
